# NOUVEAU FASCICULE DE BREVET EUROPEEN

(11) **EP 3 363 614 B2**
(45) Date de publication et mention de la décision concernant l'opposition: **22.11.2023**
(45) Mention de la délivrance du brevet: 04.09.2019
(21) Numéro de dépôt: 18305082.2
(22) Date de dépôt: 30.01.2018
(51) Int. Cl.: B29C 49/42, B08B 5/02, B29C 49/06, B29K 67/00, B29L 31/00

(54) **DISPOSITIF ET PROCEDE DE DEPOUSSIERAGE DE L'INTERIEUR D'AU MOINS UNE PREFORME**
VORRICHTUNG UND VERFAHREN ZUM ENTSTAUBEN DES INNEREN MINDESTENS EINER VORFORM
DEVICE AND METHOD FOR REMOVING DUST FROM THE INSIDE OF AT LEAST ONE PREFORM

(30) Priorité: 16.02.2017 FR 1751249
(43) Date de publication de la demande: 22.08.2018
(73) Titulaire: Sidel Participations, 76930 Octeville-sur-Mer (FR)
(72) Inventeur: QUETEL, François, 76930 Octeville-sur-mer (FR); TROUILLET, Mikael, 76930 Octeville-sur-mer (FR); CARON, Julien, 76930 Octeville-sur-mer (FR)
(74) Mandataire: Sidel Group

(56) Documents cités:
- JP-A- 2014 083 779
- JP-A- 2016 093 908
- JP-A- 2016 120 597
- US-B1- 6 984 360
- US-B2- 7 806 680

## Description

### DOMAINE TECHNIQUE DE L'INVENTION

L'invention concerne un dispositif et un procédé de dépoussiérage de l'intérieur d'au moins une préforme.

L'invention concerne plus particulièrement un dispositif de dépoussiérage de l'intérieur d'au moins une préforme en matière thermoplastique par insufflation d'air de dépoussiérage, ladite préforme d'axe principal comportant un corps creux fermé par un fond et muni axialement à l'opposé d'un col délimitant une ouverture, ledit dispositif comportant au moins :
- des moyens de transport de préformes,
- des moyens d'insufflation d'air de dépoussiérage qui sont montés mobiles axialement entre au moins une position haute et une position basse,
- des moyens d'actionnement pour déplacer sélectivement les moyens d'insufflation entre lesdites positions haute et basse,
- des moyens d'aspiration agencés à l'extérieur de la préforme pour aspirer l'air de dépoussiérage introduit par les moyens d'insufflation afin d'évacuer les poussières issues de l'intérieur de la préforme.

Des dispositifs selon l'état de la technique sont décrits dans les documents US6984360B1 et US7806680B2.

L'invention concerne plus particulièrement un procédé de dépoussiérage de l'intérieur d'au moins une préforme en matière thermoplastique par insufflation d'air de dépoussiérage, ladite préforme d'axe principal comportant un corps creux fermé par un fond et muni axialement à l'opposé d'un col délimitant une ouverture.

### ÉTAT DE LA TECHNIQUE

On connaît de l'état de la technique des exemples de dispositif de dépoussiérage de l'intérieur d'au moins une préforme en matière thermoplastique par insufflation d'air sous pression.

De manière connue, les préformes en matière thermoplastique sont destinées à la fabrication de récipients, tels que des bouteilles, flacons, pots etc.

Les préformes sont généralement fabriquées par moulage par injection de matière thermoplastique préalablement à leur transformation en récipients, généralement sur autre site industriel.

Les préformes sont alors transportées en vrac de leur site de fabrication jusqu'à celui de leur transformation et le plus souvent stockées sur chacun d'eux.

Par conséquent, on a pu constater que différents types de poussières étaient alors susceptibles de pénétrer à l'intérieur des préformes.

Par « poussières », on entend de manière non limitative de fines particules de matière, tels que des grains de poussières mais encore des morceaux d'emballage comme du carton, etc. ou de matière thermoplastique notamment mais non exclusivement sous la forme de filaments.

On connait de l'état de la technique l'utilisation d'un dispositif de dépoussiérage pour traiter des récipients obtenus à partir de préformes. Toutefois, les performances d'un tel dispositif ne sont pas satisfaisantes du fait de l'importance du volume d'un récipient par comparaison à celui d'une préforme.

C'est la raison pour laquelle, on utilise avantageusement un dispositif de dépoussiérage pour éliminer les poussières présentes à l'intérieur des préformes. Le dispositif de dépoussiérage des préformes est par exemple agencé en amont du four.

Pour fabriquer des récipients, on rappelle que les préformes sont conditionnées thermiquement dans un four afin de ramollir la matière du corps en chauffant à une température permettant ensuite sa transformation, par soufflage ou par étirage-soufflage, dans un des moules d'une unité de moulage.

Pour ce faire, le dispositif de dépoussiérage comporte des moyens d'insufflation constitués par des tubes qui sont aptes à insuffler de l'air comprimé à l'intérieur de la préforme et qui sont associés à des moyens d'aspiration aptes à évacuer hors de la préforme simultanément l'air insufflé et les poussières.

Le tube d'insufflation est monté mobile en translation par rapport à la préforme, coulissant axialement entre une position haute et une position basse dans laquelle au moins une partie du tube est reçue à l'intérieur de la préforme.

Dans les dispositifs de dépoussiérage selon l'état de la technique, l'air est insufflé par un orifice situé à l'extrémité libre du tube au début de la phase de descente, soit au plus tard lors de son introduction à l'intérieur de la préforme.

Le tube d'insufflation est décentré par rapport à l'axe de la préforme afin de limiter l'apparition d'un «bouchon de surpression » lors de l'introduction du tube dans la préforme.

Un tel décalage radial de l'axe du tube par rapport à l'axe de la préforme limite parfois la profondeur avec laquelle le tube est susceptible d'être introduit à l'intérieur sans qu'une interférence ne se produise entre le tube et la préforme.

Avec certaines préformes, le dépoussiérage obtenu n'est pas satisfaisant car le tube occupant sa position basse est alors trop éloigné du fond de la préforme pour obtenir un balayage efficace des poussières qui se concentrent notamment au fond en raison de la gravité.

Outre que le phénomène de « bouchon de surpression » limite également la vitesse à laquelle on réalise la descente du tube d'insufflation, la Demanderesse a pu établir que l'air de dépoussiérage insufflé pendant la descente avait pour effet de plaquer les poussières contre la surface interne et non pas comme recherché de balayer les poussières présentes à l'intérieur de la préforme.

Une installation de fabrication de récipients à partir de préformes en matière thermoplastique (encore appelée « souffleuse ») comporte par exemple successivement au moins un four, une unité de moulage et parfois une remplisseuse, en amont ou en aval de laquelle une étiqueteuse peut également être agencée, ainsi qu'une boucheuse pour fermer les récipients après remplissage.

Dans de telles installations, les cadences de fabrication de récipients ne cessent de croître, par conséquent la durée d'un cycle de dépoussiérage opéré au moyen d'un dispositif de dépoussiérage intégré à une telle installation est également un facteur à prendre en compte.

Dans les installations de fabrication de récipients de la Demanderesse, il est ainsi actuellement proposé deux formats de dispositifs de dépoussiérage de type rotatif présentant un diamètre différent en fonction des applications et cela pour permettre la mise en oeuvre du cycle de dépoussiérage au défilé sans ralentir les cadences de fabrication.

La durée d'un cycle de dépoussiérage est actuellement trop longue pour permettre une standardisation à un unique modèle de dispositif de dépoussiérage susceptible de couvrir l'ensemble des applications, en particulier des cadences.

Enfin, on recherche également à améliorer les performances de tels dispositifs de dépoussiérage pour améliorer la fiabilité et en réduire les coûts d'exploitation, notamment la consommation d'air.

Dans un dispositif de dépoussiérage, la conception générale et tout particulièrement celles des moyens d'aspiration doit donc permettre d'évacuer efficacement les poussières extraites de l'intérieur de la préforme pour garantir un dépoussiérage de qualité, voir éviter tout risque de souillure de l'environnement immédiat des préformes dans le dispositif.

Le but de l'invention est notamment de proposer un nouveau procédé de dépoussiérage permettant de résoudre au moins une partie des inconvénients de l'état de la technique et également de proposer des perfectionnements à un dispositif de dépoussiérage de l'intérieur d'une préforme, notamment destiné à la mise en oeuvre du nouveau procédé.

### BREF RESUME DE L'INVENTION

Dans ce but, l'invention propose en outre un procédé de dépoussiérage du type décrit précédemment, caractérisé en ce que le procédé de dépoussiérage comporte au moins les étapes consistant à :
(a) - déplacer des moyens d'insufflation d'une position haute à une position basse pour introduire les moyens d'insufflation à l'intérieur de la préforme sans y insuffler d'air,
(b) - insuffler de l'air sous pression par l'intermédiaire des moyens d'insufflation occupant ladite position basse dans laquelle l'extrémité libre desdits moyens d'insufflation est à une distance (d) déterminée du fond de la préforme pour balayer toutes poussières présentes à l'intérieur de la préforme et, au moins simultanément à l'insufflation, aspirer par l'intermédiaire de moyens d'aspiration au moins ledit air pour évacuer lesdites poussières ;
(c) - déplacer les moyens d'insufflation de la position basse vers la position haute pour extraire lesdits moyens d'insufflation hors de la préforme en maintenant l'insufflation de l'air sous pression et l'aspiration jusqu'à atteindre ladite position haute.

De préférence, le gaz sous pression utilisé pour le dépoussiérage de l'intérieur de la préforme est constitué par de l'air sous pression, c'est-à-dire comprimé, et pouvant avantageusement être ionisé.

Avantageusement, la préforme est agencée avec le col vers le haut lors de la mise en oeuvre du procédé de dépoussiérage selon l'invention dont les étapes successives constituent un cycle de dépoussiérage.

De préférence, l'introduction des moyens d'insufflation à travers le col s'effectue ainsi suivant un mouvement de descente jusqu'à atteindre finalement la position basse puis ultérieurement, après l'étape d'insufflation / aspiration, d'un mouvement de montée, axialement en sens opposé, jusqu'à revenir à la position haute occupée initialement.

Avantageusement, le procédé selon l'invention permet de réduire sensiblement la consommation d'air comprimé utilisé pour réaliser un cycle de dépoussiérage de l'intérieur d'une préforme.

Par comparaison avec l'état de la technique, l'air comprimé n'est en effet plus insufflé dès l'introduction des moyens d'insufflation mais uniquement à partir du moment où les moyens d'insufflation occupent la position basse.

Avantageusement, l'absence d'insufflation d'air permet notamment de réduire la durée de la phase de descente des moyens d'insufflation dans la préforme et ce faisant participe à réduire la durée totale du cycle de dépoussiérage.

Par comparaison avec l'état de la technique dans lequel l'air comprimé est insufflé dès l'introduction, l'étape de descente pour introduire les moyens d'insufflation à l'intérieur de la préforme peut être réalisée plus rapidement avec l'invention, en particulier sans que ne survienne un quelconque phénomène de « bouchon de surpression » lié à l'air déjà présent à l'intérieur de la préforme.

L'absence d'insufflation d'air lors de l'introduction des moyens d'insufflation dans la préforme permet de ne pas plaquer les poussières présentes contre la surface interne de la paroi de la préforme quand le but recherché est au contraire de les décoller pour mieux les éliminer ensuite.

Grâce à la réduction de la durée du cycle de dépoussiérage, il n'est plus nécessaire de prévoir au moins deux dispositifs de dépoussiérage présentant un diamètre différent pour couvrir l'ensemble des applications.

Avantageusement, un seul dispositif de dépoussiérage de type rotatif est susceptible de convenir pour toutes les applications, quelles que soient les cadences de défilement des préformes.

Avantageusement, le centrage des moyens d'insufflation disposés coaxialement à l'axe principal de la préforme permet de nettoyer tous types de préformes, quel qu'en soit le diamètre du col et du corps, et sans risque d'interférence entre les moyens d'insufflation et la surface interne de la préforme.

Le centrage des moyens d'insufflation par rapport à la préforme permet en particulier de garantir un dépoussiérage efficace du fond de la préforme dès lors que la buse formant l'extrémité libre des moyens d'insufflation est susceptible de pouvoir être descendue à proximité du fond, axialement à la distance (d) souhaitée.

Le centrage des moyens d'insufflation par rapport à la préforme permet de limiter les mouvements turbulents des poussières à l'intérieur de la préforme, préalablement à leur évacuation par les moyens d'aspiration.

Avantageusement, le centrage des moyens d'insufflation améliore l'efficacité en facilitant l'aspiration des poussières dès lors que cela permet axialement une remontée plus aisée de l'air insufflé chargé en poussières le long de la surface interne depuis le fond jusqu'à l'ouverture du col.

Dans le procédé de dépoussiérage selon l'invention, le fait que l'insufflation d'air sous pression débute au plus tôt lorsque les moyens d'insufflation ont atteint la position basse à l'intérieur de la préforme, a en outre pour conséquence que l'insufflation s'accompagne d'une onde de choc.

Avantageusement, une telle onde de choc provoque (ou à tout le moins facilite ultérieurement) le décollement des poussières présentes dans la préforme.

De préférence, les moyens d'insufflation demeurent en position basse pendant une durée déterminée lors de l'insufflation de l'air sous pression à l'intérieur de la préforme.

Avantageusement, l'insufflation de l'air sous pression se poursuit lorsque les moyens d'insufflation sont ensuite déplacés de la position basse vers la position haute pour être extraits hors de la préforme.

En poursuivant l'insufflation lors de la phase de montée, on maintient une surpression à l'intérieur de la préforme de manière à empêcher notamment que des poussières mises en suspension ne puissent alors être réintroduites à l'intérieur.

Selon d'autres caractéristiques du procédé de dépoussiérage selon de l'invention :
- les moyens d'insufflation sont introduits à l'intérieur de la préforme coaxialement à l'axe principal de la préforme ;
- la durée d'un cycle de dépoussiérage de l'intérieur d'une préforme comportant successivement lesdites étapes (a) à (c) est inférieur à une seconde (1 s) ;
- la durée de l'étape (b) est comprise entre 0,2 s et 0,7 s ;
- la durée de l'étape (a) et/ou de l'étape (c) est sensiblement égale à 0,1 s ;
- le gaz sous pression utilisé pour le dépoussiérage est constitué par de l'air comprimé présentant une pression comprise entre 0,5 et 2 bars, préférentiellement environ égale à 1 bar.

L'invention propose encore un dispositif de dépoussiérage selon la revendication 4.

Avantageusement, les moyens de captage du dispositif permettent d'améliorer la collecte puis surtout l'évacuation des poussières radialement vers les moyens d'aspiration.

Selon d'autres caractéristiques du dispositif de dépoussiérage selon l'invention :
- les moyens de captage comportent au moins un perçage qui s'étend axialement pour permettre le passage des moyens d'insufflation constitués par au moins un tube ;
- les moyens d'aspiration comportent au moins une buse d'aspiration qui est agencée radialement en vis-à-vis des moyens de captage ;
- les moyens d'actionnement des moyens d'insufflation comportent au moins un vérin pneumatique ;
- les moyens de captage comportent des moyens de butée amovibles pour régler la course des moyens d'insufflation entre la position haute et la position basse ;
- le dispositif comporte des moyens de détection qui sont agencés pour contrôler la position occupée par les moyens d'insufflation, respectivement la position haute et/ou la position basse.

Avantageusement, le dispositif de dépoussiérage selon l'invention est utilisé pour la mise en oeuvre du procédé de dépoussiérage de l'intérieur d'au moins une préforme en matière thermoplastique par insufflation d'air décrit précédemment.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en coupe qui représente schématiquement une partie d'un dispositif de dépoussiérage selon un exemple de réalisation de l'invention et qui illustre les moyens de captage agencés à l'aplomb du col d'une préforme destinée à être dépoussiérée par un tube d'insufflation du dispositif de dépoussiérage occupant la position haute ;
- la figure 2 est une représentation schématique qui illustre les différentes étapes du procédé de dépoussiérage de l'intérieur d'une préforme selon l'invention formant un cycle de dépoussiérage.

### DESCRIPTION DETAILLEE DES FIGURES

Dans la suite de la description, on adoptera à titre non limitatif une direction axiale selon laquelle s'étend l'axe principal de la préforme et une direction radiale, orthogonale à la direction axiale.

On utilisera également à titre non limitatif les termes « supérieur » et « inférieur » ou « haut » et « bas » en référence à la direction axiale, les termes « intérieur » ou « extérieur » sont utilisés d'une manière générale et notamment par rapport à la préforme pour désigner un élément situé soit dedans, soit en dehors de la préforme.

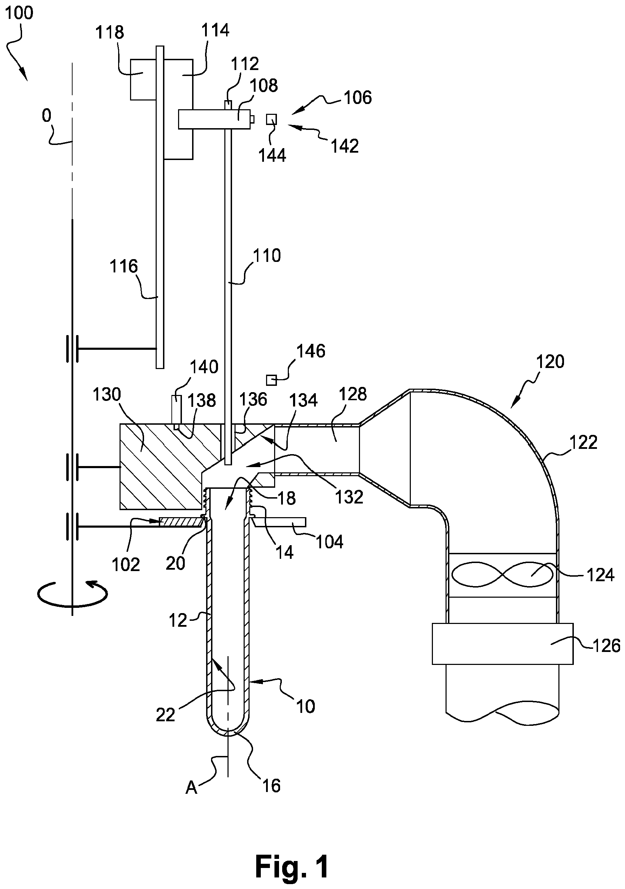

On a représenté sur la figure 1 un exemple de réalisation d'un dispositif 100 de dépoussiérage de l'intérieur d'une préforme 10 en matière thermoplastique.

Selon l'exemple représenté sur la figure 1, la préforme 10 comporte principalement un corps 12 creux qui, muni d'un col 14, s'étend axialement suivant un axe A principal.

Le corps 12 de la préforme 10 est fermé à une extrémité par un fond 16 et comporte axialement, à l'extrémité opposée, une ouverture 18 délimitée par un bord du col 14.

La préforme 10 comporte une collerette 20 qui s'étend radialement en saillie vers l'extérieur, au niveau de la jonction du col 14 avec le corps 12.

Une telle préforme 10 est fabriquée par moulage par injection de matière thermoplastique, en particulier en PET (PolyEthylène-Terephtalate), de sorte que le col 14 présente sa forme définitive, soit celle du col du récipient.

De préférence, le col 14 de la préforme 10 selon l'exemple est muni d'un filetage afin de permettre une fermeture ultérieure du récipient par un bouchon à vis complémentaire.

La préforme 10 comporte une surface 22 interne qui s'étend axialement du fond 16 jusqu'au bord du col 14 délimitant l'ouverture 18.

De préférence et tel que représenté sur la figure 1, la préforme 10 occupe une position dite « col en haut ».

Dans l'exemple de réalisation, le dispositif 100 de dépoussiérage de l'intérieur de préformes est du type rotatif.

Le dispositif 100 de dépoussiérage présente globalement une conception similaire à celle d'une roue de transfert de préformes communément utilisée dans une installation de fabrication de récipients pour transporter successivement les préformes.

Dans une telle installation de fabrication de récipient, le dispositif 100 de dépoussiérage est par exemple agencé en amont du four (non représenté).

Le dispositif 100 de dépoussiérage est alimenté de manière continue par exemple par l'intermédiaire d'une roue d'alimentation en préformes 10 agencée tangentiellement en entrée. En sortie du dispositif 100 de dépoussiérage, les préformes 10 dépoussiérées sont ensuite transférées jusqu'au four, par exemple par l'intermédiaire d'une autre roue.

Avantageusement et préalablement à leur introduction dans le four, les préformes 10 dépoussiérées sont traitées par un dispositif de stérilisation utilisant un agent stérilisant constitué de peroxyde d'hydrogène (H₂O₂).

De préférence, la stérilisation des préformes 10 dépoussiérées est alors réalisée selon les enseignements des documents WO-2006/136498 et WO-2006/136499.

Ces documents décrivent un procédé de décontamination de l'intérieur d'une préforme 10 dans lequel l'agent stérilisant formé par du peroxyde d'hydrogène est déposé par condensation sur la paroi interne de la préforme, sous la forme d'un film uniforme de buée.

Dans le dispositif 100 de dépoussiérage, la préforme 10 est supportée par l'intermédiaire de moyens 102 de transport aptes à être entrainés en rotation autour d'un axe O de rotation du dispositif 100 de dépoussiérage.

Dans l'exemple de réalisation, les moyens 102 de transport sont constitués par une roue de transport comportant circonférentiellement une série d'encoches, ouvertes radialement vers l'extérieur, l'écart entre deux encoches successives étant généralement appelé « pas ».

La préforme 10 est supportée par l'intermédiaire de sa collerette 20 radiale dont la face inférieure vient prendre appui sur le pourtour de l'encoche en « U » des moyens 102 de transport.

Le dispositif 100 de dépoussiérage comporte des moyens 104 de guidage fixes qui s'étendent suivant un arc de cercle sur une partie du parcours et sont agencés radialement en vis-à-vis des moyens 102 de transport afin de maintenir les préformes 10 en position lors de l'entraînement en rotation des moyens 102 de transport.

Les préformes 10 suivent un chemin curviligne radialement délimité de part et d'autre par les moyens 102 de transport et les moyens 104 de guidage, ledit chemin s'étendant entre l'entrée du dispositif 100 de dépoussiérage où les préformes 10 sont prises en charge et la sortie où les préformes 10 sont évacuées vers l'aval.

En variante non représentée, les moyens 102 de transport comportent par exemple des pinces aptes à coopérer avec une partie du col 14 des préformes 10.

Le dispositif 100 de dépoussiérage comporte des moyens 106 d'insufflation d'air de dépoussiérage comportant un support 108 mobile dont est solidaire au moins un tube 110 d'insufflation.

Avantageusement, un support 108 peut comporter un nombre N de tubes 110 d'insufflation pour dépoussiérer simultanément plusieurs préformes 10 adjacentes.

De préférence, un support 108 comporte par exemple quatre tubes 110 d'insufflation.

Dans l'exemple de réalisation, le support 108 comporte des moyens 112 de raccordement à une source d'air sous pression délivrant l'air comprimé utilisé pour le dépoussiérage et destiné à traverser les tubes 110 creux afin de dépoussiérer l'intérieur de chaque préforme 10.

Les moyens 106 d'insufflation constitués du support 108 et d'au moins un tube 110 sont montés mobiles axialement entre au moins une position haute et une position basse.

La position haute représentée sur la figure 1 correspond à une position dans laquelle le tube 110 d'insufflation s'étend en dehors de la préforme 10 de sorte qu'une préforme 10 est libre d'être présente dans l'encoche des moyens 102 de transport, plus précisément d'y être amenée ou d'en être ôtée.

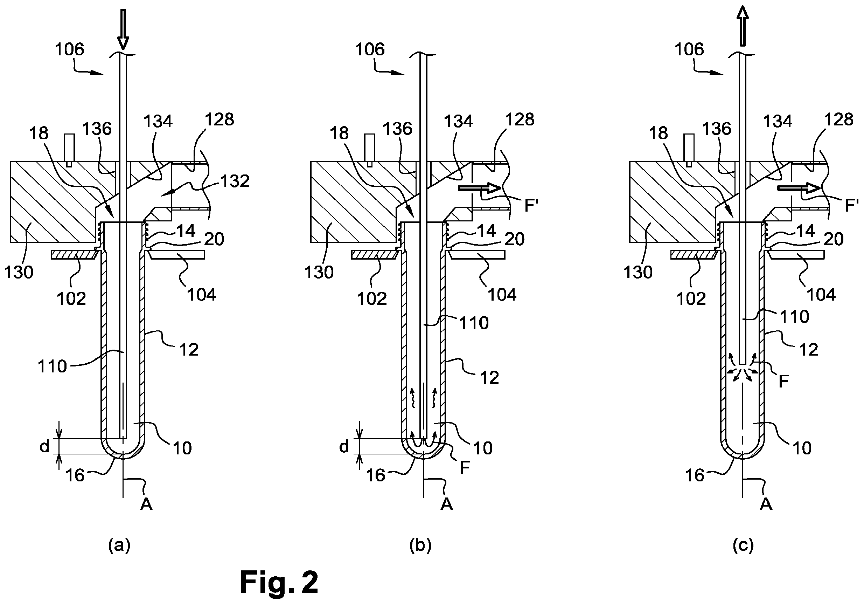

La position basse (voir figure 2) correspond à une position dans laquelle l'extrémité libre du tube 110 d'insufflation est axialement à une distance (d) du fond 16 de la préforme 10.

La distance (d) est par exemple comprise entre 10 et 30 mm selon la préforme, de préférence de l'ordre de 20 mm.

Le dispositif 100 de dépoussiérage comporte des moyens 114 d'actionnement pour déplacer sélectivement les moyens 106 d'insufflation entre lesdites positions haute et basse.

Tel que représenté sur la figure 1, le support 108 est lié en déplacement aux moyens 114 d'actionnement qui coulissent axialement relativement à une platine 116 de support.

La platine 116 de support est fixée à un bâti rotatif (non représenté) du dispositif 100 de dépoussiérage.

Avantageusement, les moyens 114 d'actionnement des moyens 106 d'insufflation comportent au moins un actionneur.

Avantageusement, l'actionneur est un vérin pneumatique double effet, ici de préférence sans tige.

En variante, l'actionneur est un vérin pneumatique simple effet comportant des moyens de rappel, tels qu'un ressort, pour rappeler automatiquement les moyens 106 d'insufflation vers la position haute.

En variante non représentée, les moyens 114 d'actionnement des moyens 106 d'insufflation comportent au moins un actionneur électrique.

La platine 116 supporte au moins un distributeur 118 qui est relié à une source pour l'alimentation en air du vérin pneumatique formant les moyens 114 d'actionnement.

L'air sous pression est utilisé d'une part dans le vérin pour provoquer le déplacement des moyens 106 d'insufflation vers la position basse et, d'autre part, pour le dépoussiérage.

Toutefois, l'air sous pression est utilisé à des pressions différentes pour chaque fonction de sorte que l'air est avantageusement délivré par des circuits d'alimentation distincts ce qui ne préjuge pas de l'utilisation d'une source commune.

Avantageusement, le dispositif 100 de dépoussiérage comporte un distributeur tournant (non représenté) pour alimenter sélectivement en air sous pression les moyens 114 d'actionnement d'une part et les moyens 106 d'insufflation d'autre part.

Le dispositif 100 de dépoussiérage comporte avantageusement une pluralité de postes de dépoussiérage qui sont répartis circonférentiellement autour de l'axe O de rotation.

Le dispositif 100 de dépoussiérage comporte des moyens 120 d'aspiration agencés à l'extérieur de la préforme 10 pour aspirer l'air de dépoussiérage introduit par les moyens 106 d'insufflation de manière à évacuer les poussières issues de l'intérieur de la préforme 10.

De préférence, les moyens 120 d'aspiration comportent au moins un conduit 122 d'évacuation relié à une turbine 124 (représentée schématiquement sur la figure 1 sous la forme d'une hélice) et des moyens 126 de filtration pour filtrer l'air circulant dans le conduit 122.

Avantageusement, les moyens 120 d'aspiration comportent une buse 128 agencée en entrée du conduit 122 d'évacuation.

Le dispositif 100 de dépoussiérage comporte des moyens 130 de captage qui sont destinés à venir coiffer l'ouverture 18 du col 14 de la préforme 10 pour capter l'air et les poussières à évacuer par les moyens 120 d'aspiration.

Les moyens 130 de captage comportent au moins une cavité 132 dont la surface interne est configurée pour former un déflecteur 134 apte à dévier radialement l'air extrait et les poussières en direction des moyens 120 d'aspiration.

La cavité 132 est ouverte radialement vers l'extérieur, dans la direction radialement opposée à l'axe O de rotation du dispositif 100 de dépoussiérage, enveloppant le col 14 de la préforme 10 pour favoriser le captage.

Dans l'exemple de réalisation, les moyens 130 de captage comportent au moins un perçage 136 qui s'étend axialement pour permettre le passage traversant du tube 110 des moyens 106 d'insufflation vers l'ouverture 18 du col 14 de la préforme 10.

Tel qu'illustré sur la figure 1, la buse 128 des moyens 120 d'aspiration est agencée radialement en vis-à-vis de la cavité 132 des moyens 130 de captage.

Avantageusement, la buse 128 forme un collecteur qui s'étend circonférentiellement en arc de cercle et en vis-à-vis des moyens 130 de captage formés par une roue comportant une série de cavités 132 juxtaposées.

La roue formant les moyens 130 de captage est ainsi pourvue radialement en périphérie d'une série de cavités 132 se suivant avec un écartement correspondant au pas entre deux encoches successives des moyens 102 de transport des préformes 10 de telle sorte que l'ensemble soit en coïncidence axialement.

De préférence, les moyens 130 de captage comportent au moins un trou 138 ménagé dans la face supérieure et destiné à recevoir des moyens 140 de butée.

Le dispositif 100 de dépoussiérage comporte des moyens 140 de butée amovibles pour régler la course axiale des moyens 106 d'insufflation entre la position haute et la position basse en fonction du type de préforme 10.

Les moyens 140 de butée comportent un pied qui est reçu dans le trou 138 complémentaire et coopèrent par exemple avec une partie du support 108, en variante une pièce liée en déplacement au support 108 ou encore au moyen 114 d'actionnement tel que le vérin.

De préférence, les moyens 140 de butée sont introduits dans un trou 138 lisse.

Avantageusement, les moyens 140 de butée sont ainsi susceptibles d'être changés rapidement pour modifier la course des moyens 106 d'insufflation en fonction des applications, plus précisément des caractéristiques géométriques de la préforme 10.

En variante, les moyens 140 de butée sont vissés dans un trou 138 fileté qui est réalisé par usinage des moyens 130 de captage.

De préférence, le dispositif 100 de dépoussiérage comporte des moyens 142 de détection pour contrôler la position axiale occupée par les moyens 106 d'insufflation de manière à permettre notamment de réaliser un arrêt d'urgence en cas de problème.

Avantageusement, les moyens 142 de détection sont préférentiellement de type inductif et sont reliés à l'unité de commande (non représentée) du dispositif 100 de dépoussiérage.

Les moyens 142 de détection comportent par exemple des premiers moyens 144 de détection et des deuxièmes moyens 146 de détection respectivement destinés à détecter la position haute et la position basse des moyens 106 d'insufflation.

Les premiers moyens 144 de détection et les deuxièmes moyens 146 de détection sont respectivement décalés angulairement par rapport à l'axe O de rotation, positionnés dans des zones différentes du parcours suivi par les préformes 10 à travers le dispositif 100 de dépoussiérage.

Avantageusement, la position des deuxièmes moyens 146 de détection associés à la position basse est réglable axialement, en hauteur, pour s'ajuster aux modifications de la course axiale entre les positions haute et basse en fonction des applications.

De préférence, les moyens de réglage des deuxièmes moyens 146 de détection sont constitués par au moins une entretoise.

On a représenté sur la figure 2, les étapes d'un procédé de dépoussiérage de l'intérieur d'au moins une préforme 10 en matière thermoplastique par insufflation d'air sous pression, l'ensemble desdites étapes correspondant à un cycle de dépoussiérage de l'intérieur d'une préforme 10.

Le procédé de dépoussiérage selon l'invention sera décrit ci-après dans le cas d'une mise en oeuvre avec un dispositif 100 de dépoussiérage décrit précédemment en référence à la figure 1.

Les moyens 106 d'insufflation occupent initialement une position haute illustrée sur la figure 1.

Les moyens 106 d'insufflation formés par au moins un tube 110 sont en attente et le tube 110 est relevé de manière que son extrémité libre soit axialement en retrait, au niveau du perçage 136, par rapport à la cavité 132 des moyens 130 de captage.

Ainsi, l'extrémité libre du tube 110 ne peut interférer avec le col 14 d'une préforme 10 lors de son introduction, radialement vers l'intérieur, dans une encoche des moyens 102 de transport en entrée du dispositif 100 de dépoussiérage.

Tel qu'illustré sur la figure 2, le procédé de dépoussiérage selon l'invention comporte au moins une première étape (a) consistant à déplacer des moyens 106 d'insufflation d'une position haute à une position basse pour introduire les moyens 106 d'insufflation à l'intérieur de la préforme 10 sans y insuffler d'air.

Grâce à la phase de descente des moyens 106 d'insufflation à l'intérieur de la préforme 10 sans insufflation d'air, on économise avantageusement de l'air.

Selon une caractéristique importante, l'absence d'insufflation d'air lors de la phase de descente de l'étape (a) permet de ne plus plaquer les poussières contre la surface interne de la préforme 10.

La phase de descente est avantageusement susceptible d'être réduite, d'une durée plus courte, dès lors que l'introduction des moyens 106 d'insufflation à l'intérieur de la préforme 10 ne se heurte plus au risque d'apparition d'un « bouchon de surpression ».

Avantageusement et en l'absence de tout phénomène de «bouchon de surpression », les moyens 106 d'insufflation comportant le tube 110 sont susceptibles d'être introduits à l'intérieur de la préforme 10 coaxialement à l'axe (A) principal de la préforme 10.

Le centrage des moyens 106 d'insufflation par rapport à la préforme 10 participe à améliorer l'écoulement de l'air et des poussières vers l'ouverture 18 du col 14 et les moyens 120 d'aspiration.

Les moyens 114 d'actionnement formés par le vérin pneumatique sont commandés pour coulisser axialement vers le bas de manière à introduire, à travers l'ouverture 18, le tube 110 à l'intérieur de la préforme 10.

Tel que représenté sur la figure 2, la phase de descente des moyens 106 d'insufflation se poursuit jusqu'à atteindre une position basse dans laquelle l'extrémité libre desdits moyens 106 d'insufflation, ici le tube 110, est axialement située à une distance (d) déterminée du fond 16 de la préforme 10.

La phase de descente est par exemple effectuée en une durée de l'ordre de 0.1 seconde.

Dans un dispositif 100 de dépoussiérage selon la figure 1, la position basse du tube 110 des moyens 106 d'insufflation est déterminée par la venue en butée contre les moyens 140 de butée portés par les moyens 130 de captage.

La deuxième étape (b) du procédé de dépoussiérage consiste à insuffler de l'air sous pression par l'intermédiaire des moyens 106 d'insufflation occupant ladite position basse dans laquelle l'extrémité libre desdits moyens 106 d'insufflation est à une distance (d) déterminée du fond 16 de la préforme 10 pour balayer toutes poussières présentes à l'intérieur de la préforme 10 et, au moins simultanément à l'insufflation, aspirer par l'intermédiaire de moyens 120 d'aspiration au moins ledit air pour évacuer lesdites poussières.

Le fait d'insuffler de l'air sous pression par l'intermédiaire des moyens 106 d'insufflation en position basse a pour but de provoquer un balayage de la surface interne afin de décoller les poussières présentes à l'intérieur de la préforme 10.

Le fait d'aspirer, ici simultanément à l'insufflation de l'air de dépoussiérage, permet d'évacuer ledit air et avec lui lesdites poussières qui sont avantageusement captées grâce aux moyens 130 de captage et déviées radialement vers les moyens 120 d'aspiration et plus particulièrement la buse 128 agencée au voisinage du col 14.

On a représenté sur la figure 2, l'air de dépoussiérage introduit à l'intérieur de la préforme 10 par des flèches référencées F et l'air extrait avec les poussières par les moyens 120 d'aspiration par une flèche F'.

La deuxième étape (b) est une phase stationnaire pour les moyens 106 d'insufflation dès lors que le tube 110 est maintenu dans la position basse pendant une durée déterminée.

La durée de la deuxième étape (b) d'insufflation d'air et d'aspiration est par exemple comprise entre 0,2 s et 0,7 s.

Avantageusement, l'aspiration obtenue grâce aux moyens 120 d'aspiration débute sensiblement avant et s'achève sensiblement après l'insufflation de l'air de dépoussiérage à l'intérieur de la préforme 10.

La turbine 124 provoque une dépression à l'intérieur du conduit 122 des moyens 120 d'aspiration qui se traduit par un effort d'aspiration au niveau de la buse 128.

L'air de dépoussiérage introduit à l'intérieur de la préforme 10 par l'extrémité libre du tube 110 ressort progressivement au niveau du col 14, après avoir balayé l'intérieur et collecté les poussières s'y trouvant, le mélange est alors capté dans la cavité 132 des moyens 130 de captage puis aspiré par la buse 128 afin d'être évacué.

Grâce au déflecteur 134 de la cavité 132, le mélange d'air et de poussières est évacué radialement de manière efficace en direction de la buse 128.

La troisième étape (c) du procédé consiste à déplacer les moyens 106 d'insufflation de la position basse vers la position haute pour extraire lesdits moyens 106 d'insufflation hors de la préforme 10 en maintenant l'insufflation de l'air sous pression et l'aspiration jusqu'à atteindre ladite position haute.

Lors de la troisième étape (c), on maintient l'insufflation de l'air de dépoussiérage ainsi que l'aspiration sur au moins une partie de la course axiale correspondant à la phase de montée, de préférence sur la totalité jusqu'à atteindre la position haute occupée initialement.

La phase de montée correspondant à l'extraction des moyens 106 d'insufflation au cours de la troisième étape (c) est par exemple d'une durée sensiblement égale à 0,1 s, soit ici la même durée que la phase de descente.

Avantageusement, la durée d'un cycle de dépoussiérage de l'intérieur d'une préforme 10 effectué conformément au procédé selon l'invention, c'est à dire comportant successivement lesdites étapes (a), (b) et (c) est inférieur à une seconde (1 s).

De préférence, le gaz sous pression utilisé pour le dépoussiérage est constitué par de l'air présentant une pression comprise entre 0.5 et 2 bars, préférentiellement environ égale à 1 bar.

## Revendications

1. Procédé de dépoussiérage de l'intérieur d'au moins une préforme (10) en matière thermoplastique par insufflation d'air de dépoussiérage, ladite préforme (10) d'axe (A) principal comportant un corps (12) creux fermé par un fond (16) et muni axialement à l'opposé d'un col (14) délimitant une ouverture (18),
**caractérisé en ce que** le procédé de dépoussiérage comporte au moins les étapes consistant à :
(a) - déplacer des moyens (106) d'insufflation d'une position haute à une position basse pour introduire les moyens (106) d'insufflation à l'intérieur de la préforme (10) sans y insuffler d'air,
(b) - insuffler de l'air sous pression par l'intermédiaire des moyens (106) d'insufflation occupant ladite position basse dans laquelle l'extrémité libre desdits moyens (106) d'insufflation est à une distance (d) déterminée du fond (16) de la préforme (10) pour balayer toutes poussières présentes à l'intérieur de la préforme (10) et, au moins simultanément à l'insufflation, aspirer par l'intermédiaire de moyens (120) d'aspiration au moins ledit air pour évacuer lesdites poussières ;
(c) - déplacer les moyens (106) d'insufflation de la position basse vers la position haute pour extraire lesdits moyens (106) d'insufflation hors de la préforme (10) en maintenant l'insufflation de l'air sous pression et l'aspiration jusqu'à atteindre ladite position haute.

2. Procédé selon la revendication 1, **caractérisé en ce que** les moyens (106) d'insufflation sont introduits à l'intérieur de la préforme (10) coaxialement à l'axe (A) principal de la préforme.

3. Procédé selon la revendication 1 ou 2, **caractérisé en ce que** la durée d'un cycle de dépoussiérage de l'intérieur d'une préforme (10) comportant successivement lesdites étapes (a) à (c) est inférieur à une seconde (1 s).

4. Dispositif (100) de dépoussiérage de l'intérieur d'au moins une préforme (10) en matière thermoplastique par insufflation d'air de dépoussiérage, , ladite préforme d'axe (A) principal comportant un corps (12) creux fermé par un fond (16) et muni axialement à l'opposé d'un col (14) délimitant une ouverture (18), ledit dispositif (100) comportant au moins :
- des moyens (102) de transport de préformes (10),
- des moyens (106) d'insufflation d'air de dépoussiérage qui sont montés mobiles axialement entre au moins une position haute et une position basse,
- des moyens (114) d'actionnement pour déplacer sélectivement les moyens (106) d'insufflation entre lesdites positions haute et basse,
- des moyens (120) d'aspiration agencés à l'extérieur de la préforme (10) pour aspirer l'air de dépoussiérage introduit par les moyens (106) d'insufflation afin d'évacuer les poussières issues de l'intérieur de la préforme (10), et
- des moyens (130) de captage qui, destinés à venir coiffer l'ouverture (18) du col (14) de la préforme (10) pour collecter les poussières, comportent au moins une cavité (132) dont la surface interne est configurée pour former un déflecteur (134) apte à dévier radialement l'air extrait avec les poussières en direction des moyens (120) d'aspiration,
**caractérisé en ce que** le dispositif (100) comporte une unité de commande des moyens (106) d'insufflation et des moyens (120) d'aspiration de manière à déplacer les moyens (106) d'insufflation d'une position haute à une position basse pour introduire les moyens (106) d'insufflation à l'intérieur de la préforme (10) sans y insuffler d'air, puis à insuffler de l'air sous pression par l'intermédiaire des moyens (106) d'insufflation occupant ladite position basse dans laquelle l'extrémité libre desdits moyens (106) d'insufflation est à une distance (d) déterminée du fond (16) de la préforme (10) pour balayer toutes poussières présentes à l'intérieur de la préforme (10) et, au moins simultanément à l'insufflation, aspirer par l'intermédiaire de moyens (120) d'aspiration au moins ledit air pour évacuer lesdites poussières, et à déplacer les moyens (106) d'insufflation de la position basse vers la position haute pour extraire lesdits moyens (106) d'insufflation hors de la préforme (10) en maintenant l'insufflation de l'air sous pression et l'aspiration jusqu'à atteindre ladite position haute.

5. Dispositif selon la revendication 4, **caractérisé en ce que** les moyens (130) de captage comportent au moins un perçage (136) qui s'étend axialement pour permettre le passage des moyens (106) d'insufflation constitués par au moins un tube (110).

6. Dispositif selon l'une des revendications 4 ou 5, **caractérisé en ce que** les moyens (120) d'aspiration comportent au moins une buse (128) d'aspiration qui est agencée radialement en vis-à-vis des moyens (130) de captage.

7. Dispositif selon l'une quelconque des revendications 4 à 6, **caractérisé en ce que** les moyens (114) d'actionnement des moyens (106) d'insufflation comportent au moins un vérin pneumatique.

8. Dispositif selon l'une quelconque des revendications 4 à 7, **caractérisé en ce que** les moyens (130) de captage comportent des moyens (140) de butée amovibles pour régler la course des moyens (106) d'insufflation entre la position haute et la position basse.

9. Dispositif selon l'une quelconque des revendications 4 à 8, **caractérisé en ce que** le dispositif (100) comporte des moyens (142) de détection qui sont agencés pour contrôler la position occupée par les moyens (106) d'insufflation, respectivement la position haute et/ou la position basse.

10. Dispositif (100) selon l'une quelconque des revendications 4 à 9 pour la mise en oeuvre du procédé de dépoussiérage de l'intérieur d'au moins une préforme (10) en matière thermoplastique par insufflation d'air selon l'une des revendications 1 à 3.

## Patentansprüche

1. Verfahren zum Entstauben des Inneren wenigstens einer Vorform (10) aus thermoplastischem Material durch Einblasen von Entstaubungsluft, wobei die Vorform (10) mit der Hauptachse (A) einen Hohlkörper (12) aufweist, der durch einen Boden (16) verschlossen ist und auf der axial gegenüberliegenden Seite mit einem Hals (14) versehen ist, der eine Öffnung (18) begrenzt,
**dadurch gekennzeichnet, dass** das Verfahren zum Entstauben wenigstens die folgenden Schritte umfasst:
(a) - Verlagern von Mitteln (106) zum Einblasen aus einer hohen Position in eine niedrige Position, um die Mittel (106) zum Einblasen ins Innere der Vorform (10) einzuführen, ohne Luft in sie einzublasen,
(b) - Einblasen von Druckluft durch die Mittel (106) zum Einblasen, welche die niedrige Position einnehmen, in welcher sich das freie Ende der Mittel (106) zum Einblasen in einem bestimmten Abstand (d) vom Boden (16) der Vorform (10) befindet, um den gesamten Staub, der im Inneren der Vorform (10) vorhanden ist, wegzufegen und, wenigstens gleichzeitig mit dem Einblasen, Absaugen wenigstens dieser Luft durch Mittel (120) zum Absaugen, um den Staub abzuführen;
(c) - Verlagern der Mittel (106) zum Einblasen aus der niedrigen Position in die hohe Position, um die Mittel (106) zum Einblasen aus der Vorform (10) hinauszubewegen, unter Aufrechterhaltung des Einblasens von Druckluft und der Absaugung, bis die hohe Position erreicht wird.

2. Verfahren nach Anspruch 1, **dadurch gekennzeichnet, dass** die Mittel (106) zum Einblasen ins Innere der Vorform (10) koaxial zu der Hauptachse (A) der Vorform eingeführt werden.

3. Verfahren nach Anspruch 1 oder 2, **dadurch gekennzeichnet, dass** die Dauer eines Zyklus der Entstaubung des Inneren einer Vorform (10), der nacheinander die Schritte (a) bis (c) umfasst, kürzer als eine Sekunde (1 s) ist.

4. Vorrichtung (100) zum Entstauben des Inneren wenigstens einer Vorform (10) aus thermoplastischem Material durch Einblasen von Entstaubungsluft, wobei die Vorform mit der Hauptachse (A) einen Hohlkörper (12) aufweist, der durch einen Boden (16) verschlossen ist und auf der axial gegenüberliegenden Seite mit einem Hals (14) versehen ist, der eine Öffnung (18) begrenzt, wobei die Vorrichtung (100) wenigstens umfasst:
- Mittel (102) zum Transport von Vorformen (10),
- Mittel (106) zum Einblasen von Entstaubungsluft, welche axial beweglich zwischen wenigstens einer hohen Position und einer niedrigen Position angebracht sind,
- Mittel (114) zur Betätigung, zum selektiven Verlagern der Mittel (106) zum Einblasen zwischen der hohen und der niedrigen Position,
- Mittel (120) zum Absaugen, die außerhalb der Vorform (10) angeordnet sind, zum Absaugen der durch die Mittel (106) zum Einblasen eingeleiteten Entstaubungsluft, um den aus dem Inneren der Vorform (10) stammenden Staub abzuführen, und
- Mittel (130) zur Aufnahme, welche dazu bestimmt sind, die Öffnung (18) des Halses (14) der Vorform (10) abzudecken, um den Staub zu sammeln, und wenigstens einen Hohlraum (132) umfassen, dessen Innenfläche so gestaltet ist, dass sie ein Ablenkelement (134) bildet, welches geeignet ist, die Abluft mit dem Staub radial in Richtung der Mittel (120) zum Absaugen abzulenken,
**dadurch gekennzeichnet, dass** die Vorrichtung (100) eine Einheit zum Steuern der Mittel (106) zum Einblasen und der Mittel (120) zum Absaugen aufweist, um die Mittel (106) zum Einblasen aus einer hohen Position in eine niedrige Position zu verlagern, um die Mittel (106) zum Einblasen ins Innere der Vorform (10) einzuführen, ohne Luft in sie einzublasen, dann um Druckluft durch die Mittel (106) zum Einblasen, welche die niedrige Position einnehmen, in welcher sich das freie Ende der Mittel (106) zum Einblasen in einem bestimmten. Abstand (d) vom Boden (16) der Vorform (10) befindet, einzublasen, um den gesamten Staub, der im Inneren der Vorform (10) vorhanden ist, wegzufegen und, wenigstens gleichzeitig mit dem Einblasen, wenigstens diese Luft durch Mittel (120) zum Absaugen abzusaugen, um den Staub abzuführen, und um die Mittel (106) zum Einblasen aus der niedrigen Position in die hohe Position zu verlagern, um die Mittel (106) zum Einblasen aus der Vorform (10) hinauszubewegen, unter Aufrechterhaltung des Einblasens von Druckluft und der Absaugung, bis die hohe Position erreicht wird.

5. Vorrichtung nach Anspruch 4, **dadurch gekennzeichnet, dass** die Mittel (130) zur Aufnahme wenigstens eine Bohrung (136) aufweisen, welche sich axial erstreckt, um die Hindurchführung der Mittel (106) zum Einblasen zu ermöglichen, die aus wenigstens einem Rohr (110) bestehen.

6. Vorrichtung nach einem der Ansprüche 4 oder 5, **dadurch gekennzeichnet, dass** die Mittel (120) zum Absaugen wenigstens eine Düse (128) zum Absaugen umfassen, welche radial gegenüber den Mitteln (130) zur Aufnahme angeordnet ist.

7. Vorrichtung nach einem der Ansprüche 4 bis 6, **dadurch gekennzeichnet, dass** die Mittel (114) zur Betätigung der Mittel (106) zum Einblasen wenigstens einen Pneumatikzylinder umfassen.

8. Vorrichtung nach einem der Ansprüche 4 bis 7, **dadurch gekennzeichnet, dass** die Mittel (130) zur Aufnahme entfernbare Anschlagmittel (140) zum Einstellen des Weges der Mittel (106) zum Einblasen zwischen der hohen Position und der niedrigen Position umfassen.

9. Vorrichtung nach einem der Ansprüche 4 bis 8, **dadurch gekennzeichnet, dass** die Vorrichtung (100) Mittel (142) zur Erkennung umfasst, welche dafür ausgelegt sind, die Position zu kontrollieren, die von den Mitteln (106) zum Einblasen eingenommen wird, bzw. die hohe und/oder die niedrige Position.

10. Vorrichtung (100) nach einem der Ansprüche 4 bis 9 zur Durchführung des Verfahrens zum Entstauben des Inneren wenigstens einer Vorform (10) aus thermoplastischem Material durch Einblasen von Luft nach einem der Ansprüche 1 bis 3.

## Claims

1. Method for removing dust from the interior of at least one preform (10) made of thermoplastic material by blowing in dusting air, said preform (10), of main axis (A), having a hollow body (12) that is closed by a bottom (16) and is provided axially on the opposite side with a neck (14) delimiting an opening (18),
**characterized in that** the dust removing method has at least the steps of:
(a) - moving blowing-in means (106) from a high position to a low position in order to introduce the blowing-in means (106) into the interior of the preform (10) without blowing air into the latter,
(b) - blowing in pressurized air via the blowing-in means (106) in said low position, in which the free end of said blowing-in means (106) is at a given distance (d) from the bottom (16) of the preform (10) in order to sweep away any dust present inside the preform (10) and, at least at the same time as the blowing in, sucking out at least said air via suction means (120) in order to evacuate said dust;
(c) - moving the blowing-in means (106) from the low position to the high position in order to extract said blowing-in means (106) from the preform (10) while maintaining the blowing in of the pressurized air and the suction until said high position has been reached.

2. Method according to Claim 1, **characterized in that** the blowing-in means (106) are introduced into the interior of the preform (10) coaxially with the main axis (A) of the preform.

3. Method according to Claim 1 or 2, **characterized in that** the duration of a cycle of removing dust from the interior of a preform (10) that successively comprises said steps (a) to (c) is less than one second (1 s).

4. Device (100) for removing dust from the interior of at least one preform (10) made of thermoplastic material by blowing in dusting air, said preform, of main axis (A), having a hollow body (12) that is closed by a bottom (16) and is provided axially on the opposite side with a neck (14) delimiting an opening (18), said device (100) having at least:
- means (102) for transporting preforms (10),
- means (106) for blowing in dusting air that are mounted so as to be axially movable between at least a high position and a low position,
- actuating means (114) for selectively moving the blowing-in means (106) between said high and low positions,
- suction means (120) arranged outside the preform (10) for sucking out the dusting air introduced by the blowing-in means (106) in order to evacuate the dust coming from the interior of the preform (10), and
- collecting means (130) that are intended to cover the opening (18) of the neck (14) of the preform (10) in order to collect the dust and have at least one cavity (132), the internal surface of which is configured to form a deflector (134) that is able to radially divert the air extracted with the dust in the direction of the suction means (120),
**characterized in that** the device (100) has a unit for controlling the blowing-in means (106) and the suction means (120) so as to move the blowing-in means (106) from a high position to a low position in order to introduce the blowing-in means (106) into the interior of the preform (10) without blowing air into the latter, then to blow in pressurized air via the blowing-in means (106) in said low position, in which the free end of said blowing-in means (106) is at a given distance (d) from the bottom (16) of the preform (10) in order to sweep away any dust present inside the preform (10) and, at least at the same time as the blowing in, suck out at least said air via suction means (120) in order to evacuate said dust, and to move the blowing-in means (106) from the low position to the high position in order to extract said blowing-in means (106) from the preform (10) while maintaining the blowing in of the pressurized air and the suction until said high position has been reached.

5. Device according to Claim 4, **characterized in that** the collecting means (130) have at least one hole (136) that extends axially in order to allow the passage of the blowing-in means (106) formed by at least one tube (110).

6. Device according to either of Claims 4 and 5, **characterized in that** the suction means (120) have at least one suction nozzle (128) that is arranged radially opposite the collecting means (130).

7. Device according to any one of Claims 4 to 6, **characterized in that** the means (114) for actuating the blowing-in means (106) have at least one pneumatic cylinder.

8. Device according to any one of Claims 4 to 7, **characterized in that** the collecting means (130) have removable stop means (140) for regulating the travel of the blowing-in means (106) between the high position and the low position.

9. Device according to any one of Claims 4 to 8, **characterized in that** the device (100) has detection means (142) that are designed to control the position taken up by the blowing-in means (106), namely the high position and/or the low position, respectively.

10. Device (100) according to any one of Claims 4 to 9 for implementing the method for removing dust from the interior of at least one preform (10) made of thermoplastic material by blowing in air according to one of Claims 1 to 3.
